# DEMANDE DE BREVET EUROPEEN

(11) **EP 0 572 300 A1**
(43) Date de publication de la demande: **01.12.1993**
(21) Numéro de dépôt: 93401277.4
(22) Date de dépôt: 18.05.1993
(51) Int. Cl.: B60R 22/26

(54) **Dispositif de verrouillage au contact d'un plancher de véhicule automobile, d'un ancrage de ceinture de sécurité**

(30) Priorité: 26.05.1992 FR 9206410
(71) Demandeur: REGIE NATIONALE DES USINES RENAULT S.A., F-92109 Boulogne Billancourt (FR)
(72) Inventeur: Guerlin, Philippe, F-91080 Courcouronnes (FR); Guimard, Jacques, F-91400 Saclay (FR)
(74) Mandataire: Ernst-Schonberg, Michel

(57) **Abrégé**

Dispositif de verrouillage au contact d'un plancher (12) de véhicule, d'un ancrage (43) de ceinture de sécurité porté par une armature (17) de siège basculante autour d'un axe transversal disposé à l'avant de ladite armature, du type comportant un verrou (26) articulé solidaire dudit ancrage (43) et destiné à coopérer avec une gâche (36) rigidement reliée au plancher, caractérisé par le fait que le verrou (26) est monté à rotation, dans un boîtier pivotant (25) porté par l'armature du siège et que ledit boîtier (25) est en contact d'appui sur le bord de la gâche (36) dans le but d'établir simultanément l'appui du boîtier (25) sur la gâche (36) et la retenue du verrou (26) au contact de la gâche.

## Description

L'invention concerne les dispositifs de verrouillage au contact d'un plancher de véhicule automobile d'un ancrage de ceinture de sécurité .

L'invention concerne plus particulièrement les verrouillages d'ancrages de ceinture de sécurité portés par une armature de siège basculante autour d'un axe transversal disposé à l'avant de ladite armature, du type comportant un verrou articulé solidaire dudit ancrage et destiné à être retenu dans une gâche rigidement reliée au plancher du véhicule.

Selon la publication FR-A- 2 463 024, l'ancrage porté par le plancher est constitué par une pièce de réception avec laquelle coopère un verrou mobile avec la banquette d'un siège dans le but d'obtenir l'autoverrouillage du point d'accrochage de la ceinture avec le plancher lorsque le siège occupe sa position d'utilisation.

Selon la publication FR-A-2 422 528, le verrou mobile avec l'assise est rendu solidaire avec l'ancrage porté par le plancher lorsque le siège et la ceinture sont en position d'utilisation.

La publication FR-A-2 519 867 décrit un dispositif d'autoverrouillage d'une attache de ceinture de sécurité portée par l'assise d'un siège avec un ancrage fixé au plancher. La retenue de l'attache est réalisée sous l'effet d'un effort de verrouillage opéré par le dossier dans la position d'utilisation du siège.

Les dispositifs précités posent toutefois un problème en ce qui concerne l'ajustement du verrou dans la gâche, lorsque l'armature du siège est montée à coulissement longitudinal le long du plancher.

Dans une telle configuration les variations constatées des niveaux respectifs du plancher et des coulisses du siège ont pour résultat une retenue imparfaite du verrou dans la gâche et les bruits de fonctionnement qui en résultent nécessitent l'emploi de moyens d'ajustement et un calage incompatibles avec le montage en grande série des sièges de véhicules.

Au cours de la vie du véhicule, le siège basculant, agencé de manière à conférer au véhicule un volume de chargement modifiable aura alors une sécurité d'emploi réduite notamment au cours d'une collision.

La présente invention a pour objet un dispositif d'ancrage pour une ceinture de sécurité d'un siège repliable tel qu'un siège individuel ou d'une banquette qui apporte une solution aux problèmes précités.

L'invention part donc de l'idée selon laquelle il est nécessaire de préserver les divers éléments du dispositif d'un risque d'usure prématurée susceptible de réduire la sécurité d'emploi de la ceinture de sécurité et génératrice de bruits au cours de l'exploitation du véhicule.

Selon l'invention le verrou est monté à rotation dans un boîtier pivotant porté par l'armature du siège et ledit boîtier est en contact d'appui sur le bord de la gâche dans le but d'établir simultanément l'appui du boîtier sur la gâche et la retenue du verrou en contact de la gâche.

Le dispositif ainsi réalisé permet notamment la réalisation d'ancrages de ceintures de sécurité portées par un siège coulissant et basculant, sans nécessiter de renforcements au niveau des armatures ou des glissières dudit siège.

Le dispositif permet également le maintien de la qualité de fonctionnement du dispositif compte tenu de la dispersion des tolérances de fabrication des composants du siège, du véhicule et du dispositif.

On a décrit ci-après à titre d'exemple, un mode de réalisation du dispositif de verrouillage en référence au dessin annexé dans lequel :
- la figure 1 est une représentation schématique de l'implantation d'un siège de véhicule automobile portant l'ancrage de la ceinture de sécurité conforme à l'invention.
- la figure 2 est une vue en coupe médiane de la partie arrière de l'armature basculante d'un siège de véhicule équipée du dispositif de verrouillage conforme à l'invention.
- la figure 3 est une représentation perspective du verrou et de la gâche de réception.

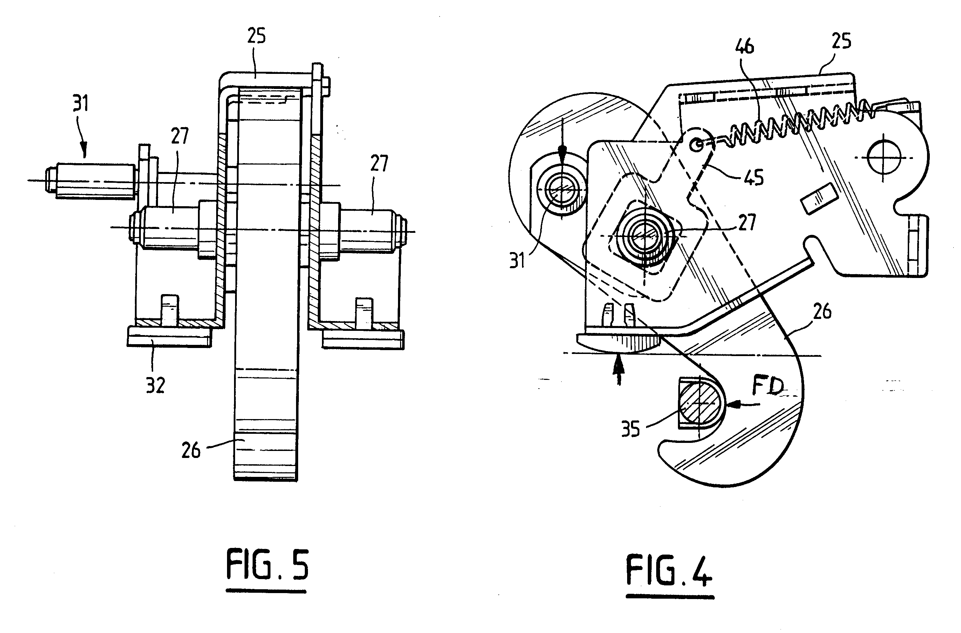

- la figure 4 est une représentation latérale du verrou et de la répartition des efforts exercés sur ledit verrou et sur son boîtier de protection.
- la figure 5 est une vue en coupe longitudinale du boîtier de protection du verrou.

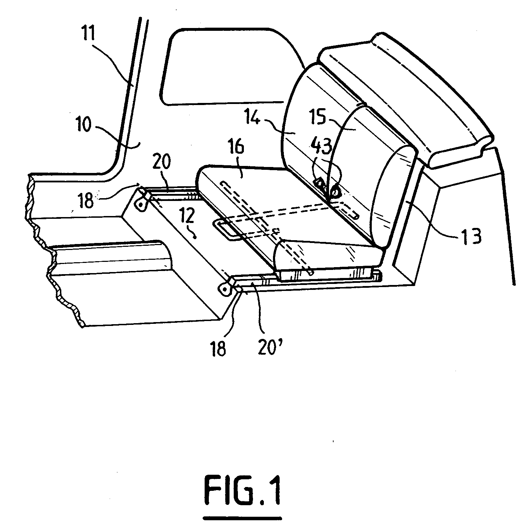

Ainsi que cela est représenté à la figure 1, l'habitacle 10 d'un véhicule défini par sa carrosserie 11, possède deux rangées de sièges réglables fixées individuellement sur le plancher 12 du véhicule.

Les dossiers 14, 15 du siège arrière constituent une cloison de séparation de l'habitacle 10 avec le compartiment à bagages 13. L'assise desdits sièges constitue une banquette 16 transformable montée à translation sur le plancher 12 à l'aide de glissières 20, 20'.

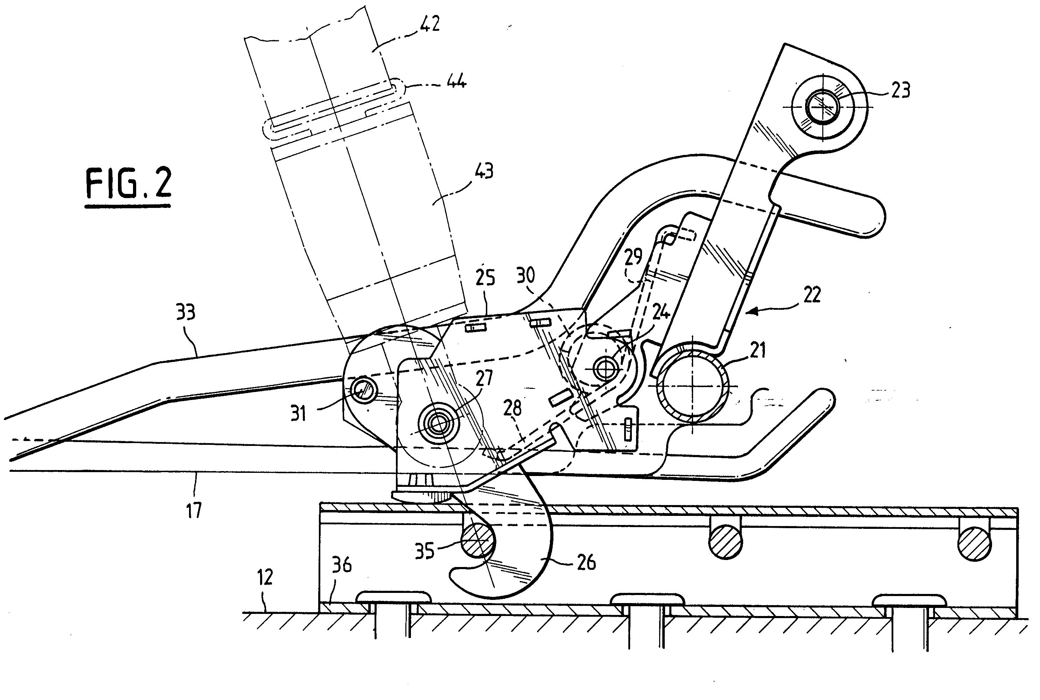

La banquette 16 est supportée par une armature formant une coquille 17 qui bascule autour d'un axe transversal 18 disposé à l'avant de ladite coquille. La partie postérieure de la coquille porte un tube de rigidification transversal 21 soudé à la coquille comme cela est montré à la figure 2.

La partie médiane du tube 21 porte un support 22 rigidement relié audit tube sur lequel est localisé un palier intermédiaire 23 des armatures articulées des dossiers 14, 15. Le support 22 porte également l'axe de montage 24 d'un boîtier de protection 25 d'un verrou d'immobilisation 26 qui solidarise la banquette 16 avec le plancher 12. Le verrou 26 est monté à rotation autour d'un axe 27 porté par le boîtier 25 et ce dernier possède une zone d'appui d'une branche 28 d'un ressort de rappel 30 du boîtier 25 et du verrou 26 dans une position de verrouillage. L'autre branche 29 du ressort 30 est en appui sur le support 22.

Le boîtier 25 porte également deux patins 32 d'appui destinés à reposer sur le plancher 12 par l'intermédiaire d'un profil 36 sous l'action du ressort 30.

Le verrou 26 porte par ailleurs un doigt 31 d'actionnement sur lequel repose l'organe de manoeuvre 33.

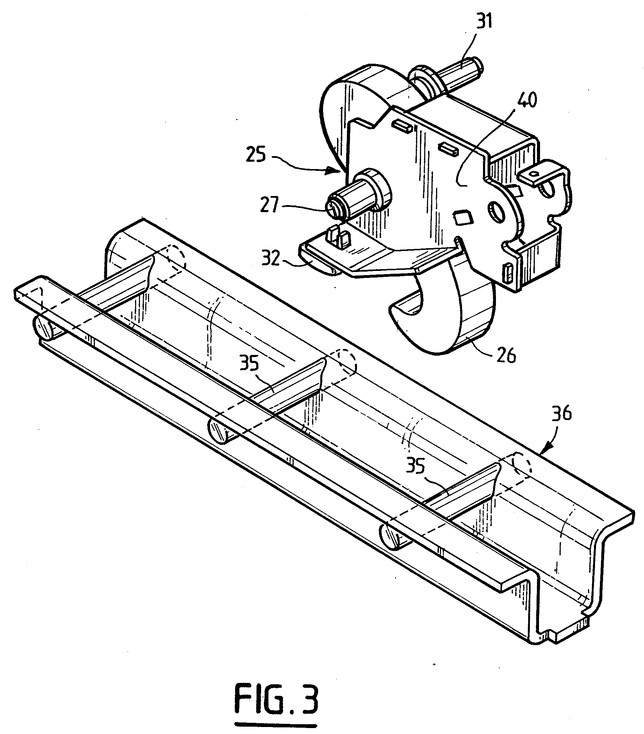

Ainsi que cela est montré sur la figure 2 ou 3, le verrou 26 est enclenché sur une traverse 35 de positionnement longitudinal de la banquette, rigidement fixée au plancher 12 par l'intermédiaire d'un profil en U 36 formant gâche. A cet effet le profil 36 porte une succession de traverses 35 soudées audit profil dans le but de transmettre les efforts entre gâche 36 et verrou 26 lorsque la banquette 16 est positionnée longitudinalement par l'intermédiaire des glissières 20, 20'.

La banquette 16 est fixée par l'intermédiaire de la coquille 17 sur les profils supérieurs respectifs des glissières 20, 20'.

L'axe de rotation 27 du verrou 26 s'étend transversalement à l'extérieur des flancs latéraux 40 du boîtier de protection 25 et porte deux ancrages de ceintures de sécurité 42 constitués par des boîtiers de réception 43 et d'enclenchement des pênes 44 montés à coulissement sur les sangles respectives des ceintures 42.

L'axe de rotation 27 du verrou 26 comporte dans sa partie médiane un tronçon de section carrée qui assure l'entraînement simultané du verrou 26 et d'un levier d'accrochage 45. Le levier 45 est relié par un ressort de rappel 46, monté en tension entre l'extrémité du levier 45 à une patte d'accrochage portée par le boîtier 25.

Le ressort 46 maintient de la sorte le verrou 26 en contact permanent avec les traverses 35 portées par le profil 36.

Le dispositif ainsi réalisé assure simultanément l'appui du boîtier 25 sur la gâche 36 et la retenue du verrou 26 au contact de l'une quelconque des traverses 35.

Les boîtiers de réception 43 des pènes 44 sont par ailleurs orientables par rapport à l'axe 27 de rotation du verrou, et permettent la transmission d'un effort d'engagement FD du verrou sur la traverse 35, sous l'effet d'un effort de tension exercé sur l'un et/ou l'autre boîtier 43.

## Revendications

**1)** Dispositif de verrouillage au contact d'un plancher (12) de véhicule, d'un ancrage (43) de ceinture de sécurité porté par une armature (17) de siège (13) basculante autour d'un axe transversal (18) disposé à l'avant de ladite armature (17), du type comportant un verrou (26) articulé solidaire dudit ancrage (43) et destiné à coopérer avec une gâche (36) rigidement reliée au plancher, caractérisé par le fait que le verrou (26) est monté à rotation, dans un boîtier pivotant (25) porté par l'armature (17) du siège et que ledit boîtier (25) est en contact d'appui sur le bord de la gâche (36) dans le but d'établir simultanément l'appui du boîtier (25) sur la gâche (36) et la retenue du verrou (26) au contact de la gâche.

**2)** Dispositif selon la revendication 1, caractérisé par le fait que le boîtier (25) du verrou (26) porte un ressort de rappel (30) à branches élastiques (28, 29) dont l'une est en appui sur le boîtier (25) tandis que l'autre branche (28) est en appui sur un élément (22) de l'armature du siège.

**3)** Dispositif selon la revendication 1 ou 2, caractérisé par le fait que chaque ancrage (43) de la ceinture de sécurité est monté à rotation autour de l'axe (27) d'articulation du verrou (26) et que ce dernier porte un doigt d'actionnement (31) sur lequel repose un organe de manoeuvre (33) dudit verrou (26).

**4)** Dispositif selon l'une quelconque des revendications 1 à 3, caractérisé par le fait que l'axe de rotation (27) du verrou (26) s'étend transversalement à l'extérieur des flancs latéraux (40) du boîtier (25) de protection et porte les ancrages (43) de ceintures de sécurité (42) orientables par rapport audit axe dans le but de transmettre un effort d'engagement du verrou (26) dans la gâche (36) sous l'effet d'un effort de tension exercé sur l'un quelconque des ancrages (43) par la ceinture de sécurité.

**5)** Dispositif selon l'une quelconque des revendications 1 à 4, caractérisé par le fait que la gâche (36) de rétention du verrou (26) est constituée par une succession de traverses (35) soudées à un profil en U rigidement fixé au plancher (12) du véhicule sur lequel reposent les appui (32) du boîtier (25) de montage du verrou.
